# EUROPÄISCHE PATENTSCHRIFT

(11) **EP 1 166 468 B1**
(45) Veröffentlichungstag und Bekanntmachung des Hinweises auf die Patenterteilung: **02.04.2003**
(21) Anmeldenummer: 00931019.4
(22) Anmeldetag: 06.04.2000
(51) Int. Cl.: H04B 7/26

(54) **SYNCHRONISATIONSVERFAHREN FÜR BASISSTATIONEN**
SYNCHRONIZATION METHOD FOR BASE STATIONS
PROCEDE DE SYNCHRONISATION POUR STATIONS DE BASE

(30) Priorität: 09.04.1999 DE 19916064
(43) Veröffentlichungstag der Anmeldung: 02.01.2002
(73) Patentinhaber: SIEMENS AKTIENGESELLSCHAFT, 80333 München (DE)
(72) Erfinder: BAHRENBURG, Stefan, D-81477 München (DE); KAMMERLANDER, Karl, D-81543 München (DE)
(86) Internationale Anmeldenummer: DE0001066
(87) Internationale Veröffentlichungsnummer: WO00062447

(56) Entgegenhaltungen:
- EP-A- 0 903 873
- DE-A- 19 737 124
- US-A- 5 600 636
- US-A- 5 784 368
- YOSHIHIKO AKAIWA ET AL: "AUTONOMOUS DECENTRALIZED INTER-BASE-STATION SYNCHRONIZATION FOR TDMA MICROCELLULAR SYSTEMS" IEEE VEHICULAR TECHNOLOGY CONFERENCE,US,NEW YORK, IEEE, Bd. CONF. 41, 19. Mai 1991 (1991-05-19), Seiten 257-262, XP000260188 ISBN: 0-87942-582-2

## Beschreibung

Die Erfindung betrifft ein Verfahren und eine Basisstation mit denen eine Synchronisation von Basisstationen eines Funk-Kommunikationssystems mit TDD-Separierung der Übertragungsrichtungen der Funkschnittstelle durchgeführt wird.

In der US 5 784 368 A werden in einem Zeitrahmen aufeinander folgend zunächst Informationen in Abwärtsrichtung und anschließend in Aufwärtsrichtung übertragen. In darauffolgenden Zeitschlitzen des Rahmens werden von der Basisstation Synchronisationssignale für die Synchronisierung anderer Basisstationen ausgesendet.

In Funk-Kommunikationssystemen werden Informationen (beispielsweise Sprache, Bildinformationen oder andere Daten) mit Hilfe von elektromagnetischen Wellen über eine Funkschnittstelle zwischen sendender und empfangender Funkstation (bspw. Basisstation und Teilnehmerstation) übertragen. Die Teilnehmerstationen sind dabei Mobilstationen oder sonstige mobile oder auch stationäre Endgeräte. Das Abstrahlen der elektromagnetischen Wellen erfolgt dabei mit Trägerfrequenzen, die in dem für das jeweilige System vorgesehenen Frequenzband liegen. Für zukünftige Mobilfunksysteme mit CDMA- oder TD/CDMA- Übertragungsverfahren über die Funkschnittstelle, beispielweise das UMTS (Universal Mobile Telekommunikation System) oder andere Systeme der dritten Generation, sind Frequenzen im Frequenzband von ca. 2000 MHz vorgesehen.

Wie bereits in DE 198 18325 und EP 98 107 763 diskutiert, ist bei einem TDD-Übertragungsverfahren (Time Division Duplex) eine Synchronität zwischen den Basisstation vonnöten, um Interferenzen zu minimieren. In EP 98 107 763 ist beispielsweise angeben, daß im Sinne eines Schneeballprinzips sich die Basisstationen nacheinander an einer zuvor synchronisierten Basisstation orientieren und ihre Sendezeitpunkte danach ausrichten. Aus dem in Deutschland betriebenen C-Netz, siehe telcom report 9 (1986), "Network Synchronisation in the C450 Mobile Radio System", S.49-51, ist es ferner bekannt, eine zentrale Basisstation als Zeitreferenz zu nutzen, auf die sich umliegende Basisstationen ständig synchronisieren können. Es wird eine funktechnische Ressourcen bindende Outband-Signalisierung benutzt. Bei diesen Verfahren ist eine zentrale Kontrolle bzw. Auslösung der Synchronisation nötig, die entsprechend überwacht werden muß. Der Aufwand ist entsprechend groß und steigt bei einer Verdichtung des Funk-Kommunikationssystems weiter an.

Weitere Synchronisationsverfahren sehen hochstabile Zeitreferenzen in den Basisstationen vor, z.B. hochstabile Oszillatoren oder GPS-Empfänger (global positioning system). Diese Mittel sind jedoch sehr aufwendig und müssen in jeder Basisstation lokal vorgehalten werden. Bei der Nutzung von GPS kann eine in geschlossenen Räumen installierte Basisstation nicht synchronisiert werden, da der Funkkontakt zum GPS-Satelliten fehlt.

Nutzt man die Synchronisation über die Funkschnittstelle, so sind dafür eigene Kanäle vorzusehen, die funktechnische Ressourcen binden und somit der Datenübertragung verlorengehen. Bei einer TDD-Separierung (Time Division Duplex) von Auf- und Abwärtsrichtung der Übertragung in einem Frequenzband sind die funktechnischen Ressourcen besonders knapp, da im Vergleich zur FDD-Separierung (Frequency Division Duplex) nur die halbe Bandbreite zur Verfügung steht.

Der Erfindung liegt daher die Aufgabe zugrunde, ein Verfahren und eine Basisstation zur Sychronisation anzugeben, die weniger funktechnische Ressourcen binden. Diese Aufgabe wird durch das Verfahren mit den Merkmalen des Anspruchs 1 und die Basisstation mit den Merkmalen des Anspruch 14 gelöst. Vorteilhafte Weiterbildungen der Erfindung sind den Unteransprüchen zu entnehmen.

Beim erfindungsgemäßen Verfahren zur Synchronisation von Basisstationen eines Funk-Kommunikationssystems sind die Basisstationen mit Teilnehmerstationen über eine Funkschnittstelle mit TDD-Separierung der Übertragungsrichtungen verbindbar. Dabei sendet eine erste Basisstation im Übergang zwischen Abwärts- und Aufwärtsrichtung ein Synchronisationssignal, das von einer zweiten Basisstation empfangen wird. Die zweite Basisstation leitet aus dem Synchronisationssignal eine Zeitreferenz ab und verwendet die Zeitreferenz zu ihrer zeitlichen Synchronisation. In einem Rahmen der Funkschnittstelle befinden sich sowohl Zeitschlitze für die Ab- als auch für die Aufwärtsrichtung, die durch eine Schutzzeit getrennt sind, um ein Übersprechen zu verhindern. Die Schutzzeit ist in der Größenordnung von 2 x der maximalen Signallaufzeit innerhalb der Funkzelle. Die Schutzzeit ist vor allem für Teilnehmerstationen vonnöten, die sich am Zellrand befinden, die letzten Aussendungen der Basisstation in Abwärtsrichtung sehr spät empfangen und nicht bereits durch Aussendungen benachbarter Teilnehmerstationen in der darauffolgenden Aufwärtsrichtung gestört werden sollen.

Die Erfindung macht sich diese Schutzzeit zunutze. Durch das Senden der Synchronisationssignale während des Übergangs, d.h. kurz vor oder während der Schutzzeit, werden keine oder nur relativ wenige funktechnische Ressourcen zusätzlich benötigt. Die Synchronisationssignale sind beliebige komplexe Signale, wobei jedoch insbesondere Chipfolge als Synchronisationssequenzen, Dirac-Impulse oder Folgen von Dirac-Impulsen, Spreizkodes aus einer Menge von Kanalkodes (channelization codes) oder auch Sinusschwingungen genutzt werden können.

Werden nach einer vorteilhaften Weiterbildung der Erfindung von unterschiedlichen Basisstationen unterschiedliche Synchronisationssignale benutzt, dann können die Basisstationen unterschieden werden und ggf. unter Einbeziehung der bekannten Koordinaten der Basisstationen die zeitliche Synchronisation genauer gestaltet werden.

Die Interferenz im Funk-Kommunikationssystem wird verringert, wenn das Synchronsationssignal sowohl zur Synchronisation anderer Basisstationen als auch zur Synchronisation von Teilnehmerstationen verwendet wird. Die mehrfache Nutzung der Synchronisationssignale gemäß dieser Weiterbildung verringert wiederum den Bedarf an funktechnischen Ressourcen für die Synchronisation.

Die Erfindung ist sowohl bei einer hierarchischen Synchronisation als auch bei einer gleichberechtigten Synchronsation einsetzbar. Der Schutzabstand zwischen Ab- und Aufwärtsrichtung und die Länge der Synchronisationssignale können so gestaltet sein, daß in einem Rahmen eine Basisstation sowohl ein Synchronisation empfängt als auch sendet. Dies beschleunigt den Synchronisationsprozess und auch eine zyklische Synchronisation nach gewissen Zeitabständen ist leicht implementierbar.

Ausführungsbeispiele der Erfindung werden anhand der beiliegenden Zeichnungen näher erläutert.

Dabei zeigen
- Fig 1: ein Funk-Kommunikationssystem,
- Fig 2: einen zellularen Aufbau des Funk-Kommunikationssystems,
- Fig 3: eine Funkschnittstelle,
- Fig 4: Senden und Empfangen von Synchronisationssignalen, und,
- Fig 5: einen schematischen Aufbau einer Basisstation.

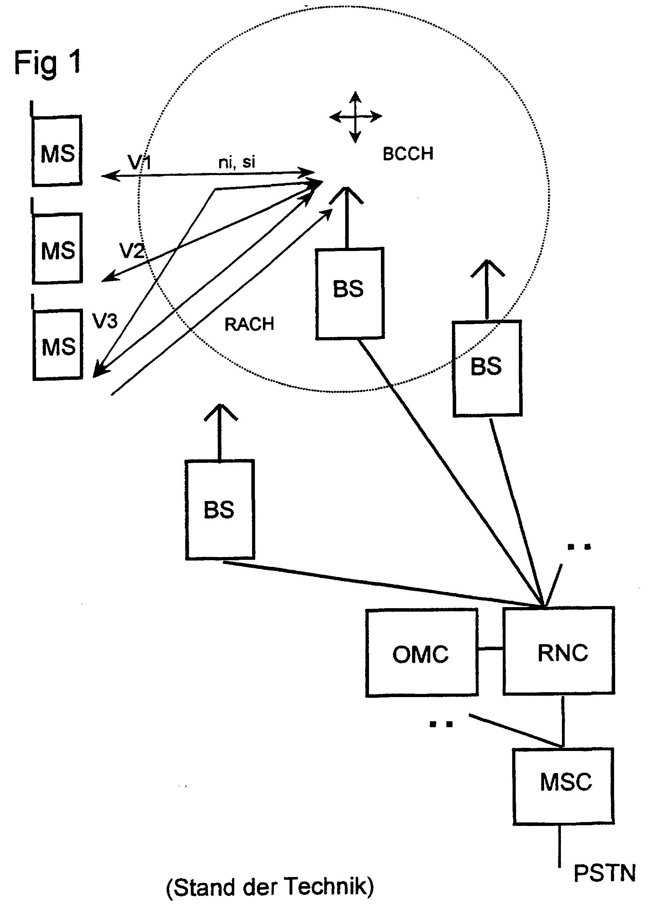

Das in Fig 1 dargestellte Mobilfunksystem als Beispiel eines Funk-Kommunikationssystems besteht aus einer Mehrzahl von Mobilvermittlungsstellen MSC, die untereinander vernetzt sind bzw. den Zugang zu einem Festnetz PSTN herstellen. Weiterhin sind diese Mobilvermittlungsstellen MSC mit jeweils zumindest einer Einrichtung RNC zur Steuerung der Basisstationen BS und zum Zuteilen von funktechnischen Ressourcen, d.h. einem Funkressourcenmanager, verbunden. Jede dieser Einrichtungen RNC ermöglicht wiederum eine Verbindung zu zumindest einer Basisstation BS. Eine solche Basisstation BS kann über eine Funkschnittstelle eine Verbindung zu einer Teilnehmerstation, z.B. Mobilstationen MS oder anderweitigen mobilen und stationären Endgeräten, aufbauen. Durch jede Basisstation BS wird zumindest eine Funkzelle gebildet.

In Fig 1 sind beispielhaft Verbindungen V1, V2, V3 zur Übertragung von Nutzinformationen ni und Signalisierungsinformationen si als Punkt-zu-Punkt-Verbindungen zwischen Teilnehmerstationen MS und einer Basisstation BS, ein Organisationskanal BCCH als Punkt-zu-Multipunkt-Verbindung von der Basisstation BS zu den Teilnehmerstationen MS und einer Kanal RACH mit willkürlichem Zugriff von den Teilnehmerstationen MS zur Basisstation BS dargestellt.

Ein Operations- und Wartungszentrum OMC realisiert Kontrollund Wartungsfunktionen für das Mobilfunksystem bzw. für Teile davon. Die Funktionalität dieser Struktur ist auf andere Funk-Kommunikationssysteme übertragbar, in denen die Erfindung zum Einsatz kommen kann, insbesondere für Teilnehmerzugangsnetze mit drahtlosem Teilnehmeranschluß. Insbesondere ein Einsatz im Mobilfunksystem nach "TD-SCDMA Radio Transmission Technology for IMT-2000, Draft V.0.4, der CATT vom September 1998, ist vorgesehen.

Die Basisstationen BS umfassen Antennen mit veränderbarer Richtcharakteristik, so daß nach einer Richtungsbestimmung für den Empfang und für bestimmte Aussendungen eine gezielte Ausrichtung des Richtcharakteristik auf eine Teilnehmerstation MS erfolgen kann. Der Organisationskanal BCCH wird omnidirektional gesendet und die ersten Zugriffe der Teilnehmerstationen MS im Kanal RACH mit willkürlichem Zugriff werden auch omnidirektional empfangen. Die übrigen Aussendungen der Basisstation BS und der Empfang wird ansonsten richtungsselektiv durchgeführt. Dies betrifft auch die dem erfolgreichen Erstzugriff folgenden Aussendungen im Kanal RACH mit willkürlichem Zugriff. Da ggf. eine Basisstation BS keine Antennen mit veränderbarer Richtcharakteristik aufweist, wird im Organisationskanal BCCH eine Information in Form eines Flags gesendet, die den Teilnehmerstationen anzeigt, welchen Antennentyp die Basisstation hat.

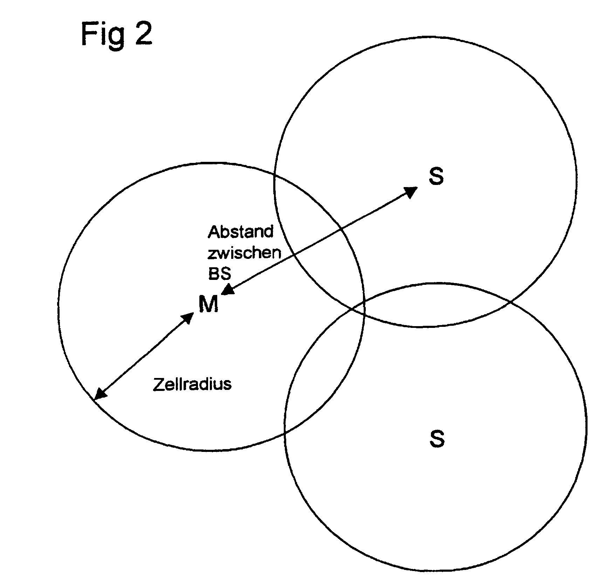

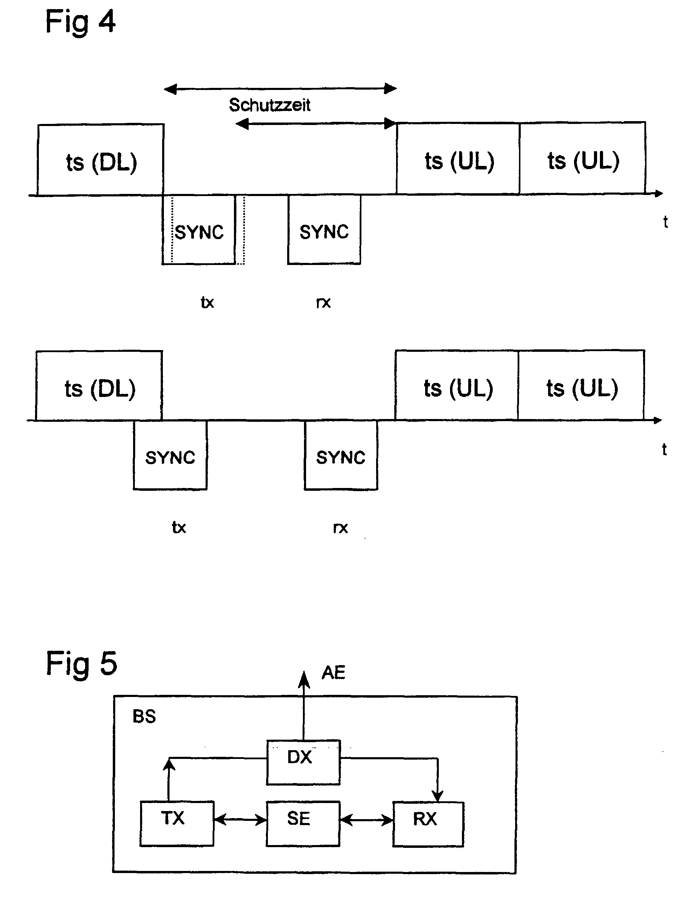

Der zellulare Aufbau des Mobilfunksystems ist aus Fig 2 ersichtlich. Die Basisstationen M, S sind derartig angeordnet, daß sich überlappende Funkzellen entstehen, so daß eine Teilnehmerstation MS ohne Verbindungsabbruch sich von einer Funkzelle in die nächste bewegen kann. Dabei ist der Abstand zwischen zwei Basisstationen M, S kleiner als der doppelte Zellradius. Beispielsweise ist der maximale Zellradius 20 km, währenddessen die Distanz zwischen zwei Basisstationen M, S 30 km ist. Die Synchronisation der Basisstationen, von denen eine als Masterstation M und die zwei anderen Basisstationen der Fig 2 als Slavestationen S ausgebildet sind, wird später anhand Fig 4 erläutert.

Die Funkschnittstelle ist als eine breitbandige Funkschnittstelle, B = 1,6 MHz (somit 3 x Frequenzbänder pro 5 MHz), mit einer Rahmendauer von 5 oder 10 ms und 10 Zeitschlitzen ts0..ts9 pro Rahmen fr, sowie mit CDMA-Teilnehmerseparierung (Code Division Multiple Access) unter Nutzung von 16 verschiedenen Spreizkodes c0 bis c15 ausgebildet.

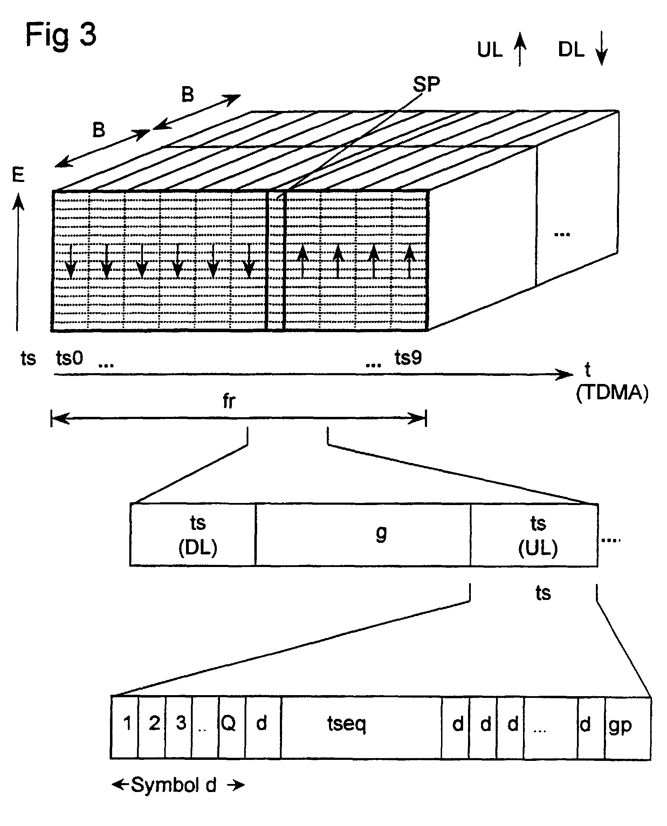

Nach Fig 3 (nicht maßstabsgemäß) wird ein Teil der Zeitschlitze ts0..ts5 gemäß einem TDD Verfahren in Abwärtsrichtung DL genutzt, der Rest ts6..ts9 in Aufwärtsrichtung UL. Anschließend an den letzten Zeitschlitz ts5 in Abwärtsrichtung DL folgt eine Schutzzeit g zur Separierung der Übertragungsrichtungen DL, UL während des Umschaltpunktes SP innerhalb des Rahmens fr. Ist der maximale Zellradius gleich 20 km, so sollte die Schutzzeit g zumindest gleich 2*20 km/(300.000 km/s) = 133 µs sein.

Der erste Zeitschlitz ts6 in Aufwärtsrichtung UL ist der Kanal mit willkürlichem Zugriff für einen Verbindungsaufbau und eine Einleitung von Paketdatenübertragungen. Dann folgen Zeitschlitze ts für Verkehrskanäle in Aufwärtrichtung UL. Die übertragenen Daten in einem Verkehrskanal sind mit einem individuellen Spreizkode c0..c15 gespreizt, der Q Chips pro Symbol enthält, wobei in die Daten eine Mittambel tseq zur Kanalschätzung eingebettet ist. Auch die Funkblöcke der Verkehrskanäle werden mit einer Schutzzeit gp abgeschlossen.

In Fig 4 sind vergrößert die Zeitschlitze ts für die Ab- und Aufwärtsrichtung DL, UL aus Fig 3 gezeigt, sowie die Schutzzeit zwischen dem letzten Zeitschlitz ts in Abwärtsrichtung DL und dem ersten Zeitschlitz ts in Aufwärtsrichtung UL. In dieser Schutzzeit sendet (tx) eine erste Basisstation ein Synchronisationssignal, das eine Chipfolge in Form einer Synchronisationssequenz SYNC ist. Noch während der Schutzzeit empfängt (rx) eine zweite Basisstation BS die Synchronisationssequenz SYNC. Die zweite Basisstation BS bestimmt den Empfangszeitpunkt und leitet eine Zeitreferenz ab. Diese Zeitreferenz wird anschließend zu zeitlichen Synchronisation der zweiten Basisstation BS verwendet. Dies erfolgt beispielsweise durch Abgleich des eigenen Zeitrasters. Die Definition der Schutzzeit kann die Synchronisationssequenz SYNC umfassen oder nicht. Insbesondere wenn die Synchronisationssequenz SYNC auch für die Teilnehmerstationen MS vorgesehen ist, so ist die Schutzzeit bezüglich der doppelten Signallaufzeit verlängert.

In Fig 4 ist als Alternative auch der Fall gezeigt, daß die Synchronisationssequenz SYNC bereits teilweise (oder auch ganz) während des letzten Zeitschlitzes ts in Abwärtsrichtung DL gesendet wird. Diese Synchronisationssequenz SYNC wird parallel auch von den Teilnehmerstationen MS empfangen und auch für deren zeitliche Synchronisation verwendet. Das Senden im Übergang zwischen den Übertragungsrichtungen, doch bereits vor der Schutzzeit ist besonders dann vorteilhaft, wenn die Funkzellen unterschiedliche Größe haben (Makro- und Mikrozellen) oder die Synchronisation über mehrere Funkzellen hinweg erfolgen soll.

Bezugnehmend auf Fig 2 kann die Synchronisation entsprechend einer hierachischen Struktur erfolgen. Die Masterstation M wird per GPS, per sehr genauer interner Uhr oder leitungsgebunden synchronisiert, währenddessen die Slavestationen S über die Funkschnittstelle synchronisiert werden. Eine Slavestation S kann ihrerseits wiederum andere Slavestation S durch ein eigenes Aussendung von Synchronisationssequenzen SYNC synchronisieren. Eine gleichbereitigte Synchronisation ist ebenso möglich. In diesem Fall empfangen neu installierte Basisstationen BS zuerst die Synchronisationssequenzen SYNC der übrigen bereits in Betrieb befindlichen Basisstationen BS und senden nach der Synchronisation später selbst Synchronisationssequenzen SYNC. Eine Synchronisation durch Mittelwertbildung nach EP 98 107 763 ist damit möglich.

Wird als Synchronisationssequenz SYNC eine Folge von 64 Chips verwendet, dabei ist die Chipdauer ca. 1 µs, und die Schutzzeit beträgt 133 µs, so erreicht die Synchronisationssequenz SYNC die zweite Basisstation BS ca. 100 µs nach Beginn der Schutzzeit, wenn sie zu Beginn der Schutzzeit von der ersten Basisstation BS gesendet wurde. Eine Störung der Zeitschlitze ts in Aufwärtsrichtung UL tritt teilweise auf, da die Synchronisationssequenz SYNC 64 µs + zeitliche Verlängerung (delay spread) durch Mehrwegeausbreitung dauert. Deshalb wird entweder die Schutzzeit verlängert (z.B. um die Dauer der Synchronisationssequenz SYNC, die ggf. auch von der Teilnehmerstationen MS ausgewertet wird), die Sequenz verkürzt oder das Senden vor Beginn der Schutzzeit durchgeführt. Ist auch ausreichend Zeit für ein Ramping der Synchronisationssequenz SYNC vorhanden, so kann eine Slavestation S ihrerseits auch selbst eine Synchronisationssequenz SYNC in der gleichen Schutzzeit senden.

Wird die Konstellation betrachtet, daß der Zellradius nur 5 km beträgt, der Abstand der Basisstationen BS 7,5 km und die Schutzzeit weiterhin 133 µs, dann erreicht die Synchronisationssequenz SYNC die Slavestation S bereits wesentlich eher. Wenn die Slavestation S selbst eine Synchronisationssequenz SYNC senden muß, kann sie die Synchronisationssequenz SYNC der Masterstation M nicht detektieren. Für diesen Fall sendet die Masterstation M eine verkürzte Synchronisationssequenz SYNC mit einer Folge von 48 Chips z.B. 40 µs nach dem Beginn der Schutzzeit. Diese Synchronisationssequenz SYNC wird von der Slavestation S innerhalb der Schutzzeit detektiert und erlaubt das eigene Senden einer Synchronisationssequenz SYNC durch die Slavestation. Alternativ kann eine Synchronisationssequenz SYNC mit einer Folge von 64 µs kurz, d.h. < 40 µs nach Beginn der Schutzzeit gesendet werden.

Der Aufbau einer Basisstation BS ist in Fig 5 gezeigt, wobei vereinfacht die Basisstation MS eine Antenne AE, einen Duplexer DX zur Trennung der Signale in Aufwärts- UL und Abwärtsrichtung DL, eine Sendeeinrichtung TX, eine Empfangseinrichtung RX und eine Steuereinrichtung SE enthält.

Die Steuereinrichtung SE bestimmt eine Synchronisationssequenz SYNC und einen Sendezeitpunkt für die Synchronisationssequenz SYNC und weist die Sendeeinrichtung TX an, die Synchronisationssequenz SYNC I zeitgerecht zu senden. Die Sendesignale mit der Synchronisationssequenz SYNC werden über den Duplexer DX und die Antenne AE abgestrahlt. Andererseits empfängt die Basisstation BS über die Antenne AE und den Duplexer DX in der Empfangseinrichtung RX die Synchronisationssequenzen SYNC anderer Basisstationen BS, bestimmt die Empfangszeitpunkte, damit eine Zeitreferenz und stimmt daraufhin durch die Steuereinrichtung SE die eigene zeitliche Synchronisation ab.

## Patentansprüche

1. Verfahren zur Synchronisation von Basisstationen (BS) eines Funk-Kommunikationssystems, bei dem
die Basisstationen (BS) mit Teilnehmerstationen (MS) über eine Funkschnittstelle mit TDD-Separierung der Übertragungsrichtungen (UL, DL) verbunden sind,
eine erste Basisstation (BS) während eines Zeitraumes des Übergangs von der Abwärts- (DL) zur Aufwärtsrichtung (UL) innerhalb eines Zeitrahmens ein Synchronisationssignal (SYNC) sendet,
eine zweite Basisstation (BS) das Sychronisationssignal empfängt,
die zweite Basisstation (BS) aus dem Synchronisationssignal eine Zeitreferenz ableitet und die Zeitreferenz zu ihrer zeitlichen Synchronisation verwendet.

2. Verfahren nach Anspruch 1, bei dem
das Synchronisationssignal (SYNC) durch eine Chipfolge als Synchronisationssequenz gebildet wird.

3. Verfahren nach Anspruch 1, bei dem
das Synchronisationssignal (SYNC) durch eine Sinusschwingung gebildet wird.

4. Verfahren nach Anspruch 1, bei dem
das Synchronisationssignal (SYNC) durch einen Dirac-Impuls gebildet wird.

5. Verfahren nach Anspruch 1, bei dem
das Synchronisationssignal (SYNC) durch eine Spreizkode aus einer Menge von Kanalkodes gebildet wird.

6. Verfahren nach einem der vorherigen Ansprüche, bei dem unterschiedliche Basisstationen (BS) unterschiedliche Synchronisationssignale benutzen.

7. Verfahren nach einem der vorherigen Ansprüche, bei dem
das Synchronsationssignal (SYNC) sowohl zur Synchronisation anderer Basisstationen (BS) als auch zur Synchronisation von Teilnehmerstationen (MS) verwendet wird.

8. Verfahren nach einem der vorherigen Ansprüche, bei dem
im Sinne einer hierarchischen Abhängigkeit die erste Basisstation (BS) eine Masterstation ist, die ihre Zeitreferenz aus einer anderen Zeitbasis gewinnt, und die zweite Basisstation (BS) eine bezüglich der Synchronisation abhängige Slavestation ist.

9. Verfahren nach Anspruch 8, bei dem
eine Slavestation wiederum Masterstation für weitere Basisstationen (BS) ist.

10. Verfahren nach Anspruch 9, bei dem
eine Slavestation im Übergang zwischen Abwärts- (DL) und Aufwärtsrichtung (UL) ein Synchronisationssignal (SYNC) empfängt und wiederum eine eigenes Synchronisationssignal (SYNC) sendet.

11. Verfahren nach einem der vorherigen Ansprüche, bei dem mehrere Basisstationen (BS) im Sinne einer Gleichberechtigung sowohl Synchronisationssignale (SYNC) senden als auch empfangen.

12. Verfahren nach einem der vorherigen Ansprüche, bei dem die erste Basisstation (BS) das Synchronisationssignal (SYNC) zu Beginn des Übergangs zwischen Abwärts- (DL) und Aufwärtsrichtung (UL) sendet.

13. Verfahren nach einem der vorherigen Ansprüche, bei dem die erste Basisstation (BS) das Synchronisationssignal (SYNC) noch während einer Übertragung in Abwärtsrichtung (DL) sendet und die zweite Basisstation (BS) das Synchronisationssignal (SYNC) in einem Schutzbereich zwischen Abwärts- (DL) und Aufwärtsrichtung (UL) oder kurz danach empfängt.

14. Basisstation (BS) für ein Funk-Kommunikationssystem, die mit Teilnehmerstationen (MS) über eine Funkschnittstelle mit TDD-Separierung der Übertragungsrichtungen (UL, DL) verbindbar ist,
mit einer Sendeeinrichtung (TX) zum Senden eines Synchronisationssignal (SYNC), das einer zweiten Basisstation (BS) nach dem Empfang zur Ableitung einer Zeitreferenz und zu deren zeitlicher Synchronisation dient,
mit einer Steuereinrichtung (SE) zur zeitlichen Einstellung des Sendens des Synchronisationssignal (SYNC) während eines Zeitraumes des Übergangs von der Abwärts- (DL) zur Aufwärtsrichtung (UL) innerhalb eines Zeitrahmens.

## Revendications

1. Procédé de synchronisation de stations de base (BS) d'un système de radiocommunication, dans lequel
les stations de base (BS) sont connectées à des stations d'abonnés (MS) via une interface radio avec séparation, en mode TDD, des directions de transmission (UL, DL),
une première station de base (BS) émet un signal de synchronisation (SYNC) pendant un espace de temps lors du passage de la direction descendante (DL) à la direction ascendante (UL) dans les limites d'un cadre de temps,
une deuxième station de base (BS) reçoit le signal de synchronisation,
la deuxième station de base (BS) déduit une référence temporelle du signal de synchronisation et utilise ladite référence temporelle pour sa propre synchronisation temporelle

2. Procédé selon la revendication 1, dans lequel le signal de synchronisation (SYNC) est constitué par une suite de puces servant de séquence de synchronisation.

3. Procédé selon la revendication 1, dans lequel le signal de synchronisation (SYNC) est constitué par une oscillation sinusoïdale.

4. Procédé selon la revendication 1, dans lequel le signal de synchronisation (SYNC) est constitué par une impulsion de Dirac.

5. Procédé selon la revendication 1, dans lequel le signal de synchronisation (SYNC) est constitué par un code d'étalement extrait d'un ensemble de codes de canaux.

6. Procédé selon l'une des revendications précédentes, dans lequel différentes stations de base (BS) utilisent différents signaux de synchronisation.

7. Procédé selon l'une des revendications précédentes, dans lequel le signal de synchronisation (SYNC) est utilisé aussi bien pour la synchronisation d'autres stations de base (BS) que pour la synchronisation de stations d'abonnés (MS).

8. Procédé selon l'une des revendications précédentes, dans lequel, au sens d'une dépendance hiérarchique, la première station de base (BS) est une station maîtresse qui tire sa référence temporelle d'une autre base temporelle et la deuxième station de base (BS) est une station dépendante, pour ce qui est de la synchronisation.

9. Procédé selon la revendication 8, dans lequel une station dépendante est elle-même une station maîtresse pour d'autres stations de base (BS).

10. Procédé selon la revendication 9, dans lequel une station dépendante reçoit un signal de synchronisation (SYNC) au moment de l'inversion des directions descendante (DL) et ascendante (UL) et émet à son tour un propre signal de synchronisation (SYNC).

11. Procédé selon l'une des revendications précédentes, dans lequel plusieurs stations de base (BS) émettent et reçoivent des signaux de synchronisation (SYNC) au sens d'une base d'égalité.

12. Procédé selon l'une des revendications précédentes, dans lequel la première station de base (BS) émet le signal de synchronisation (SYNC) au début de l'inversion des directions descendante (DL) et ascendante (UL).

13. Procédé selon l'une des revendications précédentes, dans lequel la première station de base (BS) émet le signal de synchronisation (SYNC) pendant une transmission en direction descendante (DL) et la deuxième station de base (BS) reçoit le signal de synchronisation (SYNC) dans une plage de protection entre la direction descendante (DL) et la direction ascendante (UL) ou peu après celle-ci.

14. Station de base (BS) pour un système de radiocommunication, pouvant être connectée à des stations d'abonnés (MS) via une interface radio, avec séparation, en mode TDD, des directions de transmission (UL, DL), comprenant
un dispositif émetteur (TX) pour émettre un signal de synchronisation (SYNC) servant à une deuxième station de base (BS) qui en déduit une référence temporelle après l'avoir reçu et l'utilise pour sa propre synchronisation temporelle,
un dispositif de réglage (SE) pour le réglage temporel de l'émission du signal de synchronisation (SYNC) pendant un espace de temps lors du passage de la direction descendante (DL) à la direction ascendante (UL) dans les limites d'un cadre de temps.

## Claims

1. Method for synchronizing base stations (BS) of a radio communications system, in which
the base stations (BS) are connected to subscriber stations (MS) via a radio interface with TDD separation of the transmission directions (UL, DL),
a first base station (BS) transmits a synchronization signal (SYNC) during a time period of the transition from the downlink direction (DL) to the uplink direction (UL) within a time frame, a second base station (BS) receives the synchronization signal,
the second base station (BS) derives a time reference from the synchronization signal and use the time reference for its time synchronization.

2. Method according to Claim 1, in which the synchronization signal (SYNC) is formed by means of a chip sequence as a synchronization sequence.

3. Method according to Claim 1, in which the synchronization signal (SYNC) is formed by means of a sinusoidal oscillation.

4. Method according to Claim 1, in which the synchronization signal (SYNC) is formed by means of a Dirac pulse.

5. Method according to Claim 1, in which the synchronization signal (SYNC) is formed by means of a spread code from a set of channel codes.

6. Method according to one of the preceding claims, in which different base stations (BS) use different synchronization signals.

7. Method according to one of the preceding claims, in which the synchronization signal (SYNC) is used both for synchronizing other base stations (BS) and for synchronizing subscriber stations (MS).

8. Method according to one of the preceding claims, in which, in terms of a hierarchical dependence, the first base station (BS) is a master station, which acquires its time reference from another timebase, and the second base station (BS) is a slave station which is dependent with respect to synchronization.

9. Method according to Claim 8, in which a slave station is in turn a master station for further base stations (BS).

10. Method according to Claim 9, in which a slave station receives a synchronization signal (SYNC) at the transition between the downlink direction (DL) and uplink direction (UL), and in turn transmits its own synchronization signal (SYNC).

11. Method according to one of the preceding claims, in which a plurality of base stations (BS) both transmit and receive synchronization signals (SYNC) with equal priority.

12. Method according to one of the preceding claims, in which the first base station (BS) transmits the synchronization signal (SYNC) at the start of the transition between the downlink direction (DL) and uplink direction (UL).

13. Method according to one of the preceding claims, in which the first base station (BS) stilL transmits the synchronization signal (SYNC) during a transmission in the downlink direction (DL), and the second base station (BS) receives the synchronization signal (SYNC) in a protective region between the downlink direction (DL) and uplink direction (UL) or shortly thereafter.

14. A base station (BS) for a radio communications system, which base station (BS) can be connected to subscriber stations (MS) via a radio interface with TDD separation of the transmission directions (UL, DL),
having a transmitter device (TX) for transmitting a synchronization signal (SYNC) which, after its reception, is used by a second base station (BS) for the derivation of a time reference and for its time synchronization,
having a control device (SE) for setting the timing of the transmission of the synchronization signal (SYNC) during a time period of the transition from the downlink direction (DL) to the uplink direction (UL) within a time frame.
